# EUROPEAN PATENT APPLICATION

(11) **EP 1 533 061 A1**
(43) Date of publication of application: **25.05.2005**
(21) Application number: 04250929.9
(22) Date of filing: 20.02.2004
(51) Int. Cl.: B23B 51/02, B23B 51/04

(54) **Structure for securing insert to insert drill**

(30) Priority: 11.11.2003 KR 2003079298; 29.12.2003 KR 2003098709
(71) Applicant: Yestool Co., Ltd., Kyungki-do, 425-834 (KR)
(72) Inventor: Jeong-Soo, Lee, Kuru-Gu 152-080, Seoul (KR)
(74) Representative: Bankes, Stephen Charles Digby

(57) **Abstract**

A structure for securing an insert (21) to an insert drill in which the insert (21) is precisely arranged in a mounting slot (3) formed on an end of a holder (1) of the insert drill. The insert drill includes the holder (1) having the mounting slot (3), a shank hole (5), a first bolt hole (7); the insert (21) having a shank part (23) and an inclined groove (25); and a tie bolt (31). The insert securing structure includes a second bolt hole (41) formed on a predetermined portion of the outer surface of the holder (1), a guide groove (29) longitudinally formed on an engaging surface of the insert (21), and a guide bolt (41) tightened into the second bolt hole (9), with an inside end of the guide bolt (41) projected into the mounting slot (3), so that the inside end of the guide bolt (41) is received into the guide groove (29) when the insert (21) is inserted into the mounting slot (3) of the holder (1).

## Description

### Technical Field

The present invention relates, in general, to structures for securing inserts to insert drills in which the inserts are precisely arranged in mounting slots formed on ends of holders of the insert drills when the inserts are inserted into the mounting slots and, more particularly, to a structure for securing an insert to an insert drill in which a guide means is provided in the mounting slot of the holder, and a guide groove is formed on an engaging surface of the insert so as to correspond to the guide means, so that the guide groove is guided by the guide means when the insert is inserted into the mounting slot of the holder, thus precisely arranging the insert in the mounting slot of the holder.

### Background Art

A structure for securing an insert to an insert drill was proposed by the inventor of the present invention in Korean Patent Application NO. 2001-0014774 ( Filed : March. 22, 2001 ), entitled 'INSERT DRILL'.

The above-mentioned conventional insert drill includes the insert, a holder and a tie bolt. The insert has a shank part on a lower end thereof, and an inclined groove which is formed on an outer surface of the shank part. The holder has a mounting slot at an end thereof, with a bolt hole formed on a predetermined portion of an outer surface of the holder. While the insert is inserted into the mounting slot of the holder, the tie bolt is tightened into the bolt hole such that an inside end of the tie bolt is in contact with the inclined groove of the shank part, thus preventing the insert from being undesirably removed from the mounting slot of the holder.

However, the conventional insert drill does not have any guide unit by which the insert is precisely arranged in the mounting slot of the holder when the insert is inserted into the mounting slot. Therefore, the insert may be undesirably incorrectly arranged in the mounting slot of the holder when a user inserts the insert into the mounting slot. If the user incorrectly inserts the insert into the mounting slot, mistakenly or carelessly, that is, if the insert is inserted into the mounting slot such that the inside end of the tie bolt is not in contact with the inclined groove of the insert, the insert may be unexpectedly removed from the mounting slot of the holder, or the concentricity of the insert and the holder may be changed, during a drilling operation.

### Disclosure of the Invention

Accordingly, the present invention has been made keeping in mind the above problems occurring in the prior art, and an object of the present invention is to provide a structure for securing an insert to an insert drill in which a guide means, such as a guide bolt, a guide projection or a guide key, is provided at a mounting slot of a holder of the insert drill, and a guide groove is formed on an engaging surface of the insert, so that the guide groove is guided by the guide means, such as the guide bolt, the guide projection or the guide key, when the insert is inserted into the mounting slot of the holder, thus precisely arranging the insert in the mounting slot.

Another object of the present invention is to provide a structure for securing an insert to an insert drill in which a guide means, such as a step or a locking projection, is provided on a lower end of a sidewall of the mounting slot of the holder of the insert drill, and a receiving means, such as a recessed part or a locking groove, is formed on the engaging surface of the insert, so that the receiving means, such as the recessed part or the locking groove, engages with the guide means, such as the step or the locking projection, when the insert is inserted into the mounting slot of the holder, thus precisely arranging the insert in the mounting slot.

In order to accomplish the above object, the present invention provides a structure for securing an insert to an insert drill, the insert drill including: a holder having a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and having a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the insert securing structure including: a second bolt hole formed on a predetermined portion of the outer surface of the holder so as to extend to the mounting slot; a guide groove longitudinally formed on an engaging surface of the insert; and a guide bolt tightened into the second bolt hole of the holder, with an inside end of the guide bolt projected into the mounting slot of the holder through the second bolt hole, so that the inside end of the guide bolt is received into the guide groove of the insert through a lower end of the guide groove when the insert is inserted into the mounting slot of the holder, thus guiding the guide groove of the insert.

The above and/or other aspects are also achieved by providing a structure for securing an insert to an insert drill, the insert drill including: a holder having a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and having a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the insert securing structure including: a guide groove longitudinally formed on an engaging surface of the insert; and a guide projection integrally formed on a predetermined portion of an inside surface of the mounting slot of the holder, so that the guide projection is received into the guide groove of the insert through a lower end of the guide groove when the insert is inserted into the mounting slot of the holder, thus guiding the guide groove of the insert.

The above and/or other aspects are also achieved by providing a structure for securing an insert to an insert drill, the insert drill including: a holder having a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and having a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the insert securing structure including: a guide groove longitudinally formed on an engaging surface of the insert; a key hole formed on a predetermined portion of the outer surface of the holder so as to extend to the mounting slot; and a guide key inserted into the key hole of the holder, with an inside end of the guide key projected into the mounting slot of the holder through the key hole, so that the inside end of the guide key is received into the guide groove of the insert through a lower end of the guide groove when the insert is inserted into the mounting slot of the holder, thus guiding the guide groove of the insert.

The above and/or other aspects are also achieved by providing a structure for securing an insert to an insert drill, the insert drill including: a holder having a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and having a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the insert securing structure including: a recessed part provided at a lower edge of an engaging surface of the insert; and a step provided on a lower end of a sidewall of the mounting slot of the holder to correspond to the recessed part of the insert, so that the recessed part of the insert is fitted over the step of the mounting slot when the insert is inserted into the mounting slot of the holder, thus arranging the insert in the mounting slot of the holder.

The above and/or other aspects are also achieved by providing a structure for securing an insert to an insert drill, the insert drill including: a holder having a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and having a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the insert securing structure including: a locking groove provided at a predetermined position of a lower edge of an engaging surface of the insert; and a locking projection provided on a predetermined position of a lower end of a sidewall of the mounting slot of the holder to correspond to the locking groove of the insert, so that the locking groove of the insert engages with the locking projection of the mounting slot when the insert is inserted into the mounting slot of the holder, thus arranging the insert in the mounting slot of the holder.

### Brief Description of the Drawings

The above and other objects, features and other advantages of the present invention will be more clearly understood from the following detailed description taken in conjunction with the accompanying drawings, in which:
FIG. 1 is an exploded perspective view of a structure for securing an insert to an insert drill, according to a first embodiment of the present invention;
FIG. 2 is a sectional view taken along the line A-A of FIG. 1;
FIG. 3 is a top view of the insert securing structure of FIG. 1;
FIG. 4 is a view corresponding to FIG. 2, but showing a second embodiment of the present invention;
FIG. 5 is a view corresponding to FIG. 2, but showing a third embodiment of the present invention;
FIG. 6 is an exploded perspective view of a structure for securing an insert to an insert drill, according to a fourth embodiment of the present invention;
FIG. 7 is a sectional view taken along the line A-A of FIG. 6;
FIG. 8 is an exploded perspective view of a structure for securing an insert to an insert drill, according to a fifth embodiment of the present invention;
FIG. 9 is an exploded perspective view of a structure for securing an insert to an insert drill, according to a sixth embodiment of the present invention.

### Best Mode for Carrying Out the Invention

Reference should now be made to the drawings, in which the same reference numerals are used throughout the different drawings to designate the same or similar components.

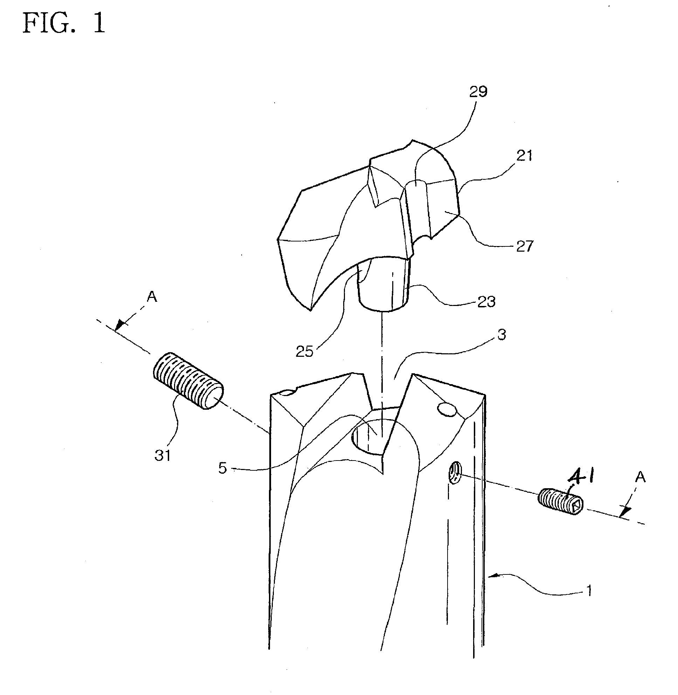

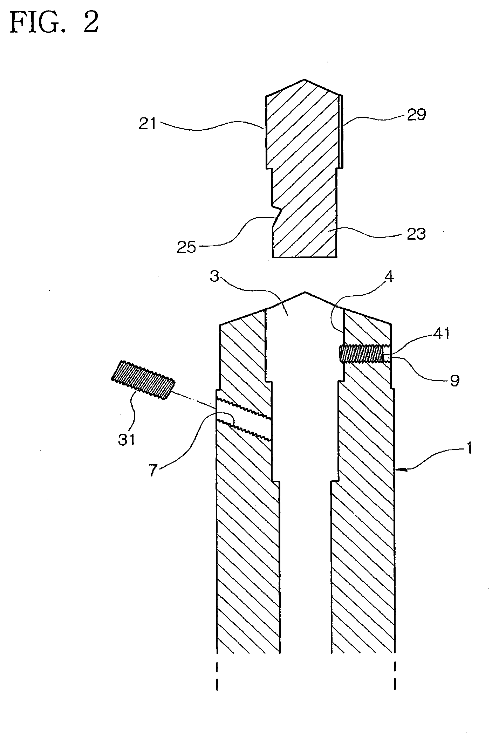

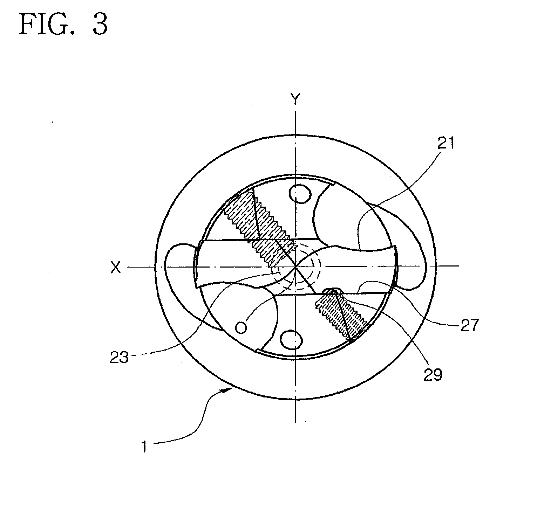

FIG. 1 is an exploded perspective view of a structure for securing an insert 21 to an insert drill, according to a first embodiment of the present invention. FIG. 2 is a sectional view taken along the line A-A of FIG. 1. FIG. 3 is a top view of the insert securing structure of FIG. 1.

As shown in FIGS. 1 and 2, the insert drill includes a holder 1. The holder 1 has a mounting slot 3 which is formed on an end of the holder 1, a shank hole 5 downward extending in the holder 1 from a bottom wall of the mounting slot 3, and a first bolt hole 7 which is formed on a predetermined portion of an outer surface of the holder 1 so as to extend to the shank hole 5. The insert drill further includes the insert 21 which is inserted into the mounting slot 3 of the holder 1. The insert 21 has a shank part 23 which is formed on a lower end of the insert 21 and is inserted into the shank hole 5 of the holder 1, with an inclined groove 25 formed on a predetermined portion of an outer surface of the shank part 23. The insert drill further includes a tie bolt 31 which is tightened into the first bolt hole 7 of the holder 1, with an inside end of the tie bolt 31 projected into the shank hole 5 of the holder 1 through the first bolt hole 7, so that the inside end of the tie bolt 31 is in contact with the inclined groove 25 of the shank part 23 of the insert 21 so as to hold the insert 21 while the shank part 23 of the insert 21 is inserted into the shank hole 5 of the holder 1, thus preventing the insert 21 from removing from the mounting slot 3 of the holder 1.

The structure for securing the insert 21 to the insert drill according to the first embodiment of the present invention includes a second bolt hole 9 which is formed on a predetermined portion of the outer surface of the holder 1 so as to extend to the mounting slot 3, and a guide groove 29 which is longitudinally formed on an engaging surface 27 of the insert 21. The insert securing structure further includes a guide bolt 41 which is tightened into the second bolt hole 9 of the holder 1. As shown in FIG. 2, an inside end of the guide bolt 41 is projected into the mounting slot 3 of the holder 1 through the second bolt hole 9, so that the inside end of the guide bolt 41 is received into the guide groove 29 of the insert 21 through a lower end of the guide groove 29 when the insert 21 is inserted into the mounting slot 3 of the holder 1, thus guiding the guide groove 29 of the insert 21.

As shown in FIG. 3, when the insert 21 is inserted into the mounting slot 3 of the holder 1 while being arranged along an X-axis of the holder 1, the guide groove 29, which is formed on the engaging surface 27 of the insert 21, is directed toward a fourth quadrant of the holder 1 which is sectioned into four quadrants by the X-axis and the Y-axis, and the guide bolt 41 is arranged in the fourth quadrant of the holder 1 while being directed toward a rotating axis of the holder 1, so that the inside end of the guide bolt 41 is received into the guide groove 29 of the insert 21.

Furthermore, the guide groove 29 and the guide bolt 41 are arranged to be diametrically opposite to the inclined groove 25 ( see, FIG. 1 ) of the shank part 23 of the insert 21 which engages with the inside end of the tie bolt 31. That is, when the guide groove 29 and the guide bolt 41 are arranged in the fourth quadrant of the holder 1, the tie bolt 31 and the inclined groove 25 are arranged in a second quadrant of the holder 1.

Next, the operation and effect of the insert securing structure of the first embodiment of the present invention having the above-mentioned construction will be described herein below. First, the guide bolt 41 is tightened into the second bolt hole 9 of the holder 1 until the inside end of the guide bolt 41 is projected into the mounting slot 3 of the holder 1 to a predetermined length through the second bolt hole 3. Thereafter, the insert 21 is inserted into the mounting slot 3 such that the guide groove 29 of the insert 21 receives the inside end of the guide bolt 41 which is projected into the mounting slot 3 of the holder 1. In the meantime, when the insert 21 is inserted into the mounting slot 3 of the holder 1 as described above, the guide bolt 41 does not interfere the movement of the insert 21. After the insert 21 is inserted into the mounting slot 3, the tie bolt 31 is tightened into the first bolt hole 7 of the holder, so that the inside end of the tie bolt 31 is in close contact with the inclined groove 25 of the shank part 23 of the insert 21, thus firmly holding the insert 21 relative to the holder 1.

In the above-mentioned insert securing structure of the present invention, even though a user carelessly attempts to insert the insert 21 into the mounting slot 3 of the holder 1 while misaligning the inset 21 relative to the mounting slot 3, the insert 21 is not inserted into the mounting slot 3 because the inside end of the guide bolt 41 is projected into the mounting slot 3 and interferes with the insert 21.

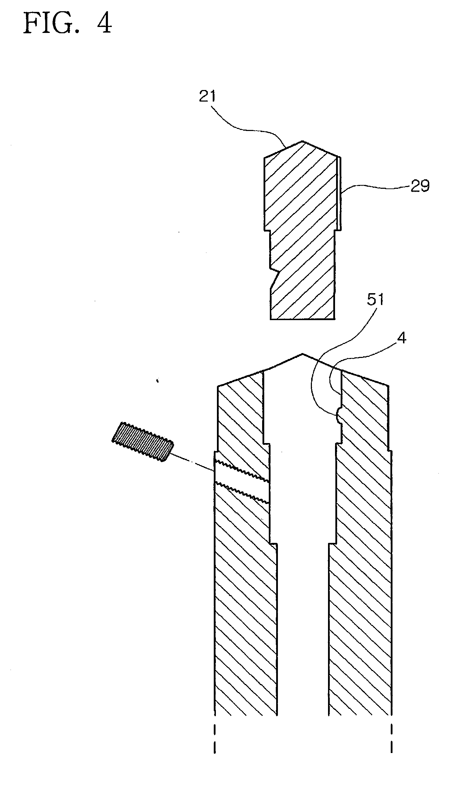

FIG. 4 is a view corresponding to FIG. 2, but showing a second embodiment of the present invention.

As shown in FIG. 4, the insert securing structure of the second embodiment of the present invention includes a guide projection 51, in place of the guide bolt 41 and the second bolt hole 9 of the structure of the first embodiment. The guide projection 51 is integrally formed on a predetermined portion of an inside surface 4 of the mounting slot 3 of the holder 1, so that the guide projection 51 is received into the guide groove 29 of the insert 21 through the lower end of the guide groove 29 when the insert 21 is inserted into the mounting slot 3 of the holder 1, thus guiding the guide groove 29 of the insert 21. The general construction of the insert securing structure according to the second embodiment except for the above-mentioned elements remains the same as the first embodiment, and further explanation is thus not deemed necessary.

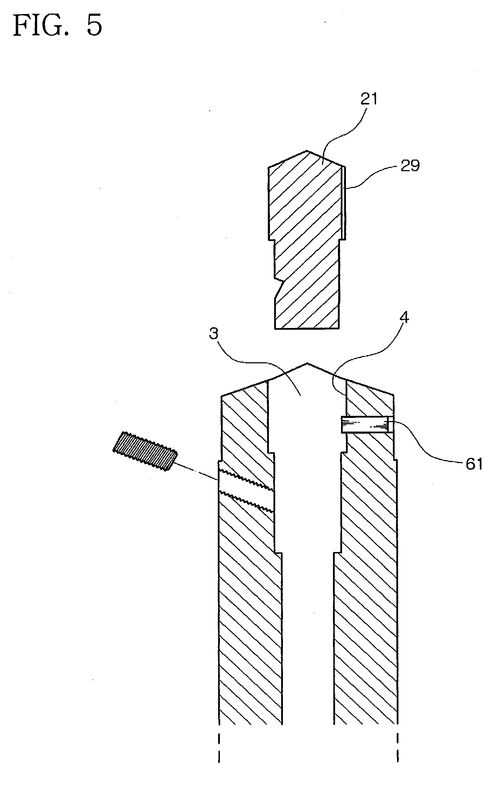

FIG. 5 is a view corresponding to FIG. 2, but showing a third embodiment of the present invention.

As shown in FIG. 5, the insert securing structure of the third embodiment of the present invention includes a key hole 19 and a guide key 61, in place of the guide bolt 41 and the second bolt hole 9 of the structure of the first embodiment. The key hole 19 is formed on a predetermined portion of the outer surface of the holder 1 so as to extend to the mounting slot 3. The guide key 61 is inserted into the key hole 19 of the holder 1, with an inside end of the guide key 61 projected into the mounting slot 3 of the holder 1 through the key hole 19, so that the inside end of the guide key 61 is received into the guide groove 29 of the insert 21 through the lower end of the guide groove 29 when the insert 21 is inserted into the mounting slot 3 of the holder 1, thus guiding the guide groove 29 of the insert 21. The general construction of the insert securing structure according to the third embodiment except for the above-mentioned elements remains the same as the first embodiment, and further explanation is thus not deemed necessary.

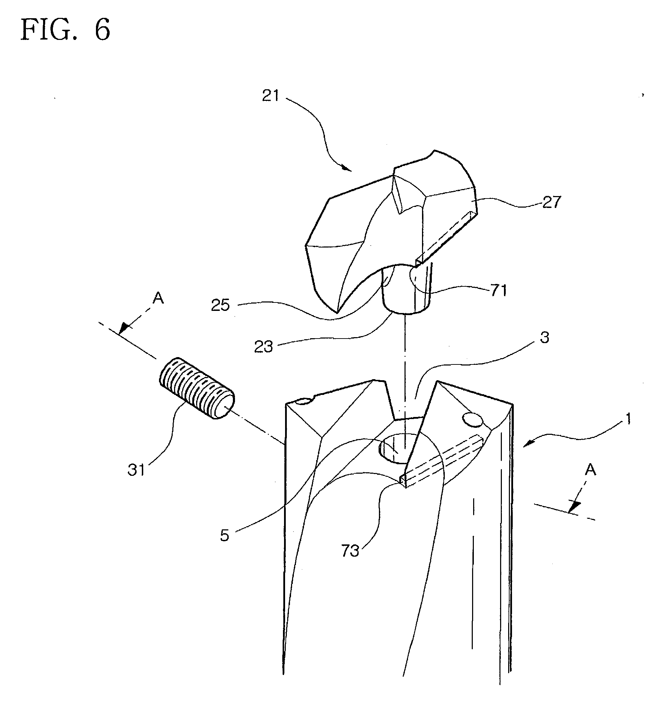

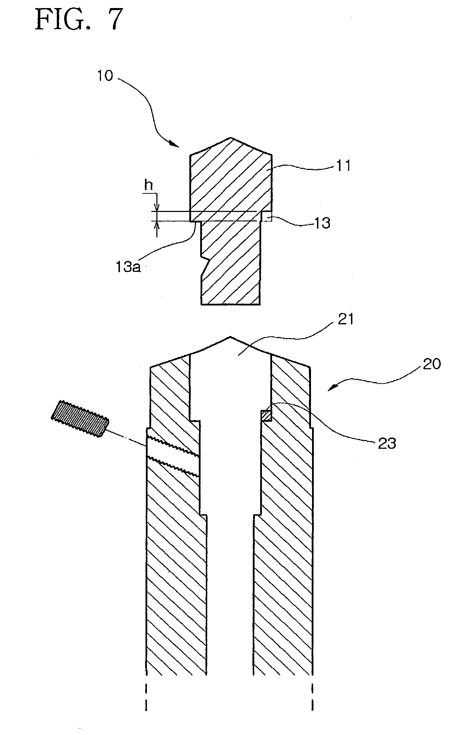

FIG. 6 is an exploded perspective view of a structure for securing an insert to an insert drill, according to a fourth embodiment of the present invention. FIG. 7 is a sectional view taken along the line A-A of FIG. 6.

As shown in FIG. 6 and 7, the insert securing structure of the fourth embodiment of the present invention includes a recessed part 71 which is provided at a lower edge of the engaging surface 27 of the insert 21. The insert securing structure further includes a step 73 which is provided on a lower end of a sidewall of the mounting slot 3 of the holder 1 to correspond to the recessed part 71 of the insert 21, so that the recessed part 71 of the insert 21 is fitted over the step 73 of the mounting slot 3 when the insert 21 is inserted into the mounting slot 3 of the holder 1, thus precisely arranging the insert 21 in the mounting slot 3 of the holder 1. The general construction of the insert securing structure according to the fourth embodiment except for the above-mentioned elements remains the same as the first embodiment, and further explanation is thus not deemed necessary.

The recessed part 71 of the insert 21 is formed by being cut to a predetermined height h from a lower surface thereof which is leveled with a lower surface 71a of a sidewall of the insert 21 opposite to the engaging surface 27 of the insert 21.

In the above-mentioned insert securing structure according to the fourth embodiment of the present invention, even though a user carelessly attempts to insert the insert 21 into the mounting slot 3 of the holder 1 while misaligning the inset 21 relative to the mounting slot 3, the insert 21 is not inserted into the mounting slot 3 because the step 73 of the mounting slot 3 is in contact with the lower surface 71 a of the sidewall of the insert 21 opposite to the engaging surface 27 of the insert 21 and interferes with the insert 21 to be not surely inserted into the mounting slot 2. Therefore, the user perceives the above state, so that it is possible to prevent the insert 21 from being inserted into the mounting slot 3 of the holder 1 while misaligning the insert 21 relative to the mounting slot 3.

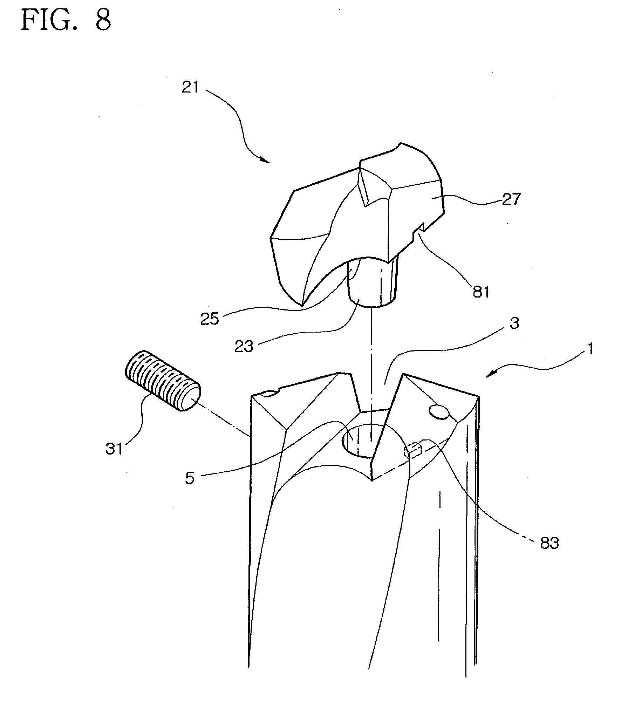

FIG. 8 is an exploded perspective view of a structure for securing an insert to an insert drill, according to a fifth embodiment of the present invention.

As shown in FIG. 8, the insert securing structure of the fifth embodiment of the present invention includes a locking groove 81 which is provided at a predetermined position of a lower edge of an engaging surface 27 of the insert 21. The insert securing structure further includes a locking projection 83 which is provided on a predetermined position of a lower end of a sidewall of the mounting slot 3 of the holder 1 to correspond to the locking groove 81 of the insert 21, so that the locking groove 81 of the insert 21 engages with the locking projection 83 of the mounting slot 3 when the insert 21 is inserted into the mounting slot 3 of the holder 1, thus precisely arranging the insert 21 in the mounting slot 3 of the holder 1. The general construction of the insert securing structure according to the fifth embodiment except for the above-mentioned elements remains the same as the first embodiment, and further explanation is thus not deemed necessary.

In the above-mentioned insert securing structure according to the fifth embodiment of the present invention, even though a user carelessly attempts to insert the insert 21 into the mounting slot 3 of the holder 1 while misaligning the inset 21 relative to the mounting slot 3, the insert 21 is not inserted into the mounting slot 3 because the locking projection 83 of the mounting slot 3 is in contact with a lower surface of a sidewall of the insert 21 opposite to the engaging surface 27 of the insert 21 and interferes with the insert 21 to be not surely inserted into the mounting slot 2. Therefore, the user perceives the above state, so that it is possible to prevent the insert 21 from being inserted into the mounting slot 3 of the holder 1 while misaligning the insert 21 relative to the mounting slot 3.

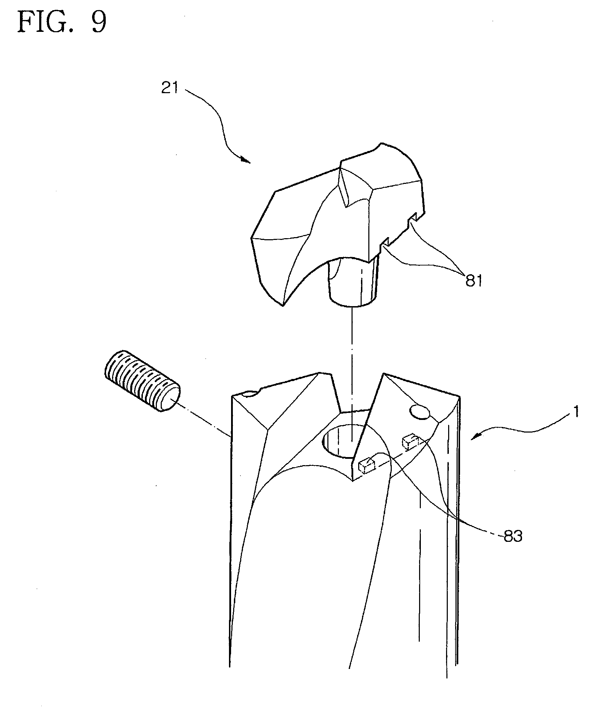

FIG. 9 is an exploded perspective view of a structure for securing an insert to an insert drill, according to a sixth embodiment of the present invention.

As shown in FIG. 9, in the insert of the insert drill according to the sixth embodiment of the present invention, the locking groove 81 of the insert 21 and the locking projection 83 of the mounting slot 3 may comprise a plurality of locking grooves 81 and a plurality of locking projections 83, respectively.

### Industrial Applicability

As described above, the present invention provides a structure for securing an insert to an insert drill in which a guide means, such as a guide bolt, a guide projection, a guide key, a step or a locking projection, is provided at a mounting slot of a holder of the insert drill, and a receiving means, such as a guide groove, a recessed part or a locking groove, is formed on an engaging surface of the insert, so that the receiving means, such as the guide groove, the recessed part or the locking groove, is guided by the guide means, such as the guide bolt, the guide projection, the guide key, the step or the guide projection, when the insert is inserted into the mounting slot of the holder, thus precisely arranging the insert in the mounting slot of the holder.

## Claims

1. A structure for securing an insert to an insert drill, the insert drill comprising: a holder comprising a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and comprising a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the structure for securing the insert to the insert drill comprising:
a second bolt hole formed on a predetermined portion of the outer surface of the holder so as to extend to the mounting slot;
a guide groove longitudinally formed on an engaging surface of the insert; and
a guide bolt tightened into the second bolt hole of the holder, with an inside end of the guide bolt projected into the mounting slot of the holder through the second bolt hole, so that the inside end of the guide bolt is received into the guide groove of the insert through a lower end of the guide groove when the insert is inserted into the mounting slot of the holder, thus guiding the guide groove of the insert.

2. The structure according to claim 1, wherein, when the insert is inserted into the mounting slot of the holder while being arranged along an X-axis of the holder, the guide groove formed on the engaging surface of the insert is directed toward a fourth quadrant of the holder, and the guide bolt is arranged in the fourth quadrant of the holder while being directed toward a rotating axis of the holder, so that the inside end of the guide bolt is received into the guide groove of the insert.

3. The structure according to claim 1, wherein the guide groove and the guide bolt are arranged to be diametrically opposite to the inclined groove of the shank part of the insert which engages with the inside end of the tie bolt.

4. A structure for securing an insert to an insert drill, the insert drill comprising: a holder comprising a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and comprising a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the structure for securing the insert to the insert drill comprising:
a guide groove longitudinally formed on an engaging surface of the insert; and
a guide projection integrally formed on a predetermined portion of an inside surface of the mounting slot of the holder, so that the guide projection is received into the guide groove of the insert through a lower end of the guide groove when the insert is inserted into the mounting slot of the holder, thus guiding the guide groove of the insert.

5. A structure for securing an insert to an insert drill, the insert drill comprising: a holder comprising a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and comprising a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the structure for securing the insert to the insert drill comprising:
a guide groove longitudinally formed on an engaging surface of the insert;
a key hole formed on a predetermined portion of the outer surface of the holder so as to extend to the mounting slot; and
a guide key inserted into the key hole of the holder, with an inside end of the guide key projected into the mounting slot of the holder through the key hole, so that the inside end of the guide key is received into the guide groove of the insert through a lower end of the guide groove when the insert is inserted into the mounting slot of the holder, thus guiding the guide groove of the insert.

6. A structure for securing an insert to an insert drill, the insert drill comprising: a holder comprising a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and comprising a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the structure for securing the insert to the insert drill comprising:
a recessed part provided at a lower edge of an engaging surface of the insert; and
a step provided on a lower end of a sidewall of the mounting slot of the holder to correspond to the recessed part of the insert, so that the recessed part of the insert is fitted over the step of the mounting slot when the insert is inserted into the mounting slot of the holder, thus arranging the insert in the mounting slot of the holder.

7. A structure for securing an insert to an insert drill, the insert drill comprising: a holder comprising a mounting slot formed on an end of the holder, a shank hole downward extending in the holder from a bottom wall of the mounting slot, a first bolt hole formed on a predetermined portion of an outer surface of the holder so as to extend to the shank hole; the insert inserted into the mounting slot of the holder, and comprising a shank part formed on a lower end of the insert and inserted into the shank hole of the holder, with an inclined groove formed on a predetermined portion of an outer surface of the shank part; and a tie bolt tightened into the first bolt hole of the holder, with an inside end of the tie bolt projected into the shank hole of the holder through the first bolt hole, so that the inside end of the tie bolt is in contact with the inclined groove of the shank part of the insert so as to hold the insert while the shank part of the insert is inserted into the shank hole of the holder, the structure for securing the insert to the insert drill comprising:
a locking groove provided at a predetermined position of a lower edge of an engaging surface of the insert; and
a locking projection provided on a predetermined position of a lower end of a sidewall of the mounting slot of the holder to correspond to the locking groove of the insert, so that the locking groove of the insert engages with the locking projection of the mounting slot when the insert is inserted into the mounting slot of the holder, thus arranging the insert in the mounting slot of the holder.

8. The structure according to claim 7, wherein the locking groove of the insert and the locking projection of the mounting slot comprise a plurality of locking grooves and a plurality of locking projections, respectively.

9. A structure for securing an insert (21) to an insert drill, the insert drill comprising:
a holder (1) with a mounting slot (3) formed on an end of the holder, a shank hole (5) extending axially into the holder from a bottom wall of the mounting slot, a first bolt hole (7) formed in a predetermined portion of an outer surface of the holder so as to extend into the shank hole, and
an insert (21) with a shank part (23) inserted into the mounting slot of the holder with a surface (25) inclined to the axis of the holder on a predetermined portion of the outer surface of the shank part and a tie bolt (31) tightened into the first bolt hole of the holder with an inner end of the tie bolt projecting into said shank hole through the first bolt hole so as to engage said inclined surface of the shank part (23) of the insert to secure the insert in position in the holder,
**characterised by** guide means for ensuring that the insert (21) is inserted into the holder in the correct rotational position, said guide means comprising a projection (41) formed in or on one of the holder and the insert and a corresponding recess formed in the other of the insert and the holder, said projection and recess being arranged to prevent full insertion of the insert into the holder unless the insert is in its correct rotational position.
